# EUROPEAN PATENT SPECIFICATION

(11) **EP 1 512 305 B1**
(45) Date of publication and mention of the grant of the patent: **08.04.2009**
(21) Application number: 02735728.4
(22) Date of filing: 07.06.2002
(51) Int. Cl.: H04W 4/18

(54) **Supporting a request for information on a mobile device in a communication system**
Unterstützung in einem Kommunikationssystem von eine Anfrage nach Informationen eines mobilen Gerätes
Assistance d'une demande d'informations sur un dispositif mobile dans un système de communication

(43) Date of publication of application: 09.03.2005
(73) Proprietor: Nokia Corporation, 02150 Espoo (FI)
(72) Inventor: VARONEN, Tomi, FIN-00230 Helsinki (FI); KIVINEN, Timo, FIN-33900 Tampere (FI); MÄKELÄ, Marko, CA 92065, Ramona (US)
(74) Representative: Cohausz & Florack
(86) International application number: PCT/IB2002/002073
(87) International publication number: WO 2003/105517

(56) References cited:
- US-B1- 6 314 296
- ETSI: "ETSI TS 123 271, Digital cellular telecommunications system (Phase 2+)(GSM);Universal Mobile Telecommunications System (UMTS); Functional stage 2 description of location services (3GPP TS 23.271 version 4.5.0 Release 4)" 1 March 2002 (2002-03-01) , ETSI , SOPHIA ANTIPOLIS, FRANCE XP002230634 cited in the application page 58, paragraph 9.5.3.5
- ETSI: "ETSI TS 101 530, Digital cellular telecommunications system (Phase 2+); Location Services (LCS); Base Station System Application Part LCS Extension (BSSAP-LE) (3GPP TS 09.31 version 7.6.0 Release 1998)" 1 December 2001 (2001-12-01) , ETSI , SOPHIA ANTIPOLIS, FRANCE XP002230635 page 39, paragraph 10.14

## Description

### FIELD OF THE INVENTION

The invention relates to a method for supporting in a communication system a request for information on a mobile device to a cellular communication network by a requesting application. The request can be initiated by the requesting application itself or by a requesting entity causing the requesting application to transmit the request. The invention relates equally to protocols for a mobile service, to a network entity for a cellular communication network, to a cellular communication network, to a mobile device, and to a communication system.

### BACKGROUND OF THE INVENTION

In cellular networks, it is known to provide location services (LCS) which enable an application for example to request the location of some mobile device connected to the network.

For UMTS (Universal Mobile Telecommunication System) and GSM (Global System for Mobile communications), for example, the technical specification 3GPP TS 23.271, V5.2.0 (2002-03): "Functional stage 2 description of LCS (Release 5)" provides mechanisms supporting mobile location services for operators, subscribers and third party service providers. According to this specification, a location information of a mobile device may be requested by and reported to an LCS client associated with the mobile device, or an LCS client within or attached to the Core Network of a PLMN (Public Land Mobile Network). Such a LCS client constitutes an application which represents an entity making use of location information as part of its service or operation. The location request by an LCS client external to the network may be originated by another external entity called requestor. The requestor may also be a person.

According to the specification TS 23.271, a PLMN should comprise several LCS entities taking care of location services provided to external LCS clients. These LCS entities may be located in particular in Gateway Mobile Location Centers (GMLC), 2G (Second Generation) MSCs (Mobile services Switching Centre), MSC servers, 2G-SGSNs (Serving GPRS (General Packet Radio Service) Support Node), 3G (Third Generation) SGSNs of the core network, and in addition in the access networks GERAN (GSM EDGE (Enhanced Data rates for GSM Evolution) Radio Access Network) and UTRAN (Universal Terrestrial Radio Access Network).

An external LCS client requesting for the location of a mobile device may be connected to the PLMN via a GMLC, while the mobile device is accessing the PLMN via a GERAN or an UTRAN. For circuit switched services, the GMLC is connected to the respective GERAN via a 2G-MSC, or to the respective UTRAN via an MSC server. For packet switched services, the GMLC is connected to the respective GERAN via a 2G-SGSN, or to the respective UTRAN via a 3G-SGSN.

The GMLC, which is thus the first node which an external LCS client accesses in a GSM PLMN, may request routing information relating to the target mobile device from a HLR (Home Location Register) or a HSS (Home Subscriber Server). After having performed a registration authorization, the GMLC then forwards the location requests to the required MSC, SGSN or MSC Server. The MSCs, MSC servers and SGSNs contain functionality which is responsible for a subscription authorization of the mobile devices and for managing location requests of LCS clients. The radio access networks determine upon request by an MSC or SGSN the positioning method that is to be used and instigate the particular message sequence for this method. The final location estimates obtained with the selected method is then returned by the respective radio access network via MSC, MSC server or SGSN and GMLC to the requesting LCS client.

During a location request procedure, the subscriber using the target mobile device might wish that an identification of the requesting entity, i.e. of the requestor, and/or of the requesting application, i.e. of the LCS client, are presented to the subscriber. In the specification TS 23.271, an identification of the requesting application that is to be presented can be determined in the mobile device based on a transmitted LCS client name. The LCS client name is defined as an address string constituting a logical name associated with the external identity of the LCS client. An identification of the requesting application that is to be presented can be determined in the mobile device based on a transmitted requestor ID.

The presented identifications may constitute only informative data for the subscriber. Alternatively, the subscriber can allow or reject a location request based on the presented identifications. According to the specification TS 23.271, the subscription profile of the mobile device might indicate to this end that the mobile device has to be notified in case of a location request or that the mobile device has to be notified with privacy verification.

The format of the LCS client name and the requestor ID is not is defined, thus the LCS client name and the requestor ID can be e.g. an MSISDN (Mobile Station Integrated Services Data Network) number, an e-mail address or an URL (universal resource locator) address.

The mobile device, however, is not able to distinguish between the different formats that might be used, which is source for possible problems. In case the mobile device receives the LCS client name or the requestor ID in the form of an MSISDN number or an e-mail address, it can retrieve additional information that is to be presented to the subscriber from the address book of the subscriber. But since the format of the received LCS client name and of the received requestor ID is not known to the mobile device, the mobile device might search at the wrong places for the desired information. The mobile device might first try, for instance, to retrieve additional information associated to a received e-mail address from a directory associating MSISDN numbers or URL-addresses to additional information. This might lead to malfunctions in the mobile device.

In business cards stored as local data records in mobile devices, telephone numbers can be recognized by a mobile device e.g. by the associated letters "tel" and fax numbers by the associated letters "fax". Such business cards can be encoded to a data transfer medium, e.g. SMS, for transmission via a communication network to another terminal. Also in VCARDs, an extra field is provided in which the format of some other field is indicated. For example, a first field might contain a phone number, while a second field comprises an indication that the format of the first field is a phone number. Business cards and VCARDs, however, have no relation to a presentation of metadata or to transmission protocols, as in the case of LCS notifications.

### SUMMARY OF THE INVENTION

It is an object of the invention to enhance in a communication system the notification to a mobile device about an information request by some requesting application. It is in particular an object of the invention to enable a mobile device to avoid possible error situations when trying to retrieve additional information from its memory based on a received identification of the requesting application or of a requesting entity causing the requesting application to request information.

This object is reached according to the invention with a method for supporting in a communication system a request for information on a mobile device to a communication network by a requesting application. It is proposed that the method comprises providing to the mobile device an identification of the requesting application together with an indication of a format used for this identification. It is to be noted that the identification of the requesting application may also be given by an identification associated to the entire entity in which the requesting application is implemented. In case the request was initiated by a requesting entity, in addition or alternatively an identification of this requesting entity may be transmitted to the mobile device, together with an indication of a format used for the identification of this requesting entity.

The proposed method can be realized in particular with communication protocols for a mobile service. The object of the invention is thus moreover reached with a protocol defining corresponding messages between the cellular communication network and the mobile device, an equally with protocols defining corresponding preceding messages between the requesting application and the communication network, and corresponding preceding messages within the communication network. The protocols define in particular how the indication of the respective format is to be included in the respective message.

The object of the invention is also reached with network entities for a cellular communication network comprising means for realizing the proposed method, and with a cellular communication network comprising such network entities.

The object of the invention is further reached with a mobile device which is able to make use of the information provided with the proposed method. The mobile device comprises to this end receiving means for receiving from a cellular communication network a notification message about an information request from a requesting application, which notification message comprises an identification of the requesting application together with an indication of a format used for the identification of the requesting application and/or an identification of a requesting entity causing the requesting application to request information together with an indication of a format used for the identification of the requesting entity. The mobile device further comprises processing means for extracting from a received notification message an included identification of a requesting application and/or of a requesting entity, for extracting from the received notification message included indications about the format used for an included identification of the requesting application and/or an included identification of the requesting entity, and for processing extracted identifications in accordance with the extracted indication of the format of the identifications. Such processing may include in particular retrieving supplementary information from the memory of the mobile device and presenting this information to a user of the mobile device. The invention thus relates as well to the presentation of metadata.

Finally, the object of the invention is reached with a communication system comprising at least the proposed communication network, the proposed mobile device and a requesting application for requesting information on a mobile device from the cellular communication network.

The invention proceeds from the consideration that if the mobile device is aware of the format used for an identification of the requesting application or the requesting entity, it is able to avoid searching at wrong places for additional information. The invention further proceeds from the consideration that it would not be feasible to allow only a single format for an identification of the requesting application or for an identification of the requesting entity. Therefore, it is proposed that the respectively employed format is made available to the mobile device together with the identification itself.

It is an advantage of the invention that the functionality of mobile devices supporting the receipt of notifications about information requests is improved. In particular, the amount of possible error situations is reduced, since additional information associated to received information can be retrieved immediately from the correct place in a memory of the mobile device, which correct place is associated to the received format. Thereby, also the speed of the operations in the mobile device is increased. It is further an advantage of the invention that it allows to save received identity information to the correct place of a memory, e.g. to save a received e-mail address under the corresponding name of the person in an e-mail directory.

Preferred embodiments of the invention become apparent from the dependent claims.

In a first preferred embodiment of the invention, the respective identification and the corresponding indication of the format employed for this identification are transmitted to the mobile device in dedicated fields. Currently, notification messages transmitted from the communication network to the mobile device usually comprise one field for the identification of the requesting application and one field for the identification of the requesting entity. Thus, it is proposed that two extra fields are added to such a notification message, one for the format of the identification of the requesting application and one for the format of the identification of the requesting entity.

In a second preferred embodiment of the invention, the coding employed for the identification of the requesting application and/or the coding employed for the identification of the requesting entity are selected for each notification message in a way that enables the mobile device to deduce the format of the respective identification. That is, a specific kind of coding or specific coding parameters are employed for each possible kind of format, or at least for selected possible kinds of format.

In a third preferred embodiment of the invention, the field employed for transmitting the identification of the requesting application and/or the field employed for transmitting the identification of the requesting entity is used for transmitting an indication of the format of the respective identification as additionally included information. For example, some character or characters at a predetermined position in the respective field could inform the receiving mobile device about the employed format.

The second and the third presented alternative for providing an indication of the respectively used format to the mobile device have the advantage that they do not require any extra fields compared to the current notification messages.

The format information is advantageously provided by the requesting application together with the corresponding identifications and forwarded by network elements of the communication network to the user. Within the network, the information has to be transmitted in particular from a network entity in an access node of the network for external requesting applications to a network entity which is able to initiate a transmission of messages to the mobile device. The format indication can be provided in messages from the requesting application and in messages within the network for example in the same way as proposed for the notification message to the mobile device.

The invention can be employed in any cellular system, which supports a request by an application for information on a mobile device connected to a cellular network of the system, for example in the ANSI (American National Standards Institute) networks employed in the USA.

The requested information on a mobile device is preferably a location information of the mobile device, and the enabled mobile service is preferably a location service. Still the invention can equally be used for other services than location services and other requests than requests for location information.

In case the invention is employed in a 3GPP communication system, the indication of the format of the identification of a requesting application, i.e. of an LCS client, and/or the indication of the format of the identification of a requesting entity, i.e. of a requestor, can be transmitted in particular in the existing "LCS Service Request" from an LCS client to a GMLC, in the existing "Provide Subscriber Location" message from a GMLC to an MSC, MSC server or SGSN, and in the existing "LCS Location Notification Invoke" message from an MSC, MSC server or SGSN to the mobile device.

The invention can further be employed in conjunction with any method for determining the required information. A requested location information can be determined for instance completely within the cellular system. In case the mobile device comprises a location or positioning application, however, e.g. a Global Positioning System (GPS) application, the location information can also be determined by the mobile device, either independently or with assistance by the communication network.

### BRIEF DESCRIPTION OF THE FIGURES

Other objects and features of the present invention will become apparent from the following detailed description considered in conjunction with the accompanying drawings.

The only figure illustrates the signaling employed for an embodiment of the invention.

### DETAILED DESCRIPTION OF THE INVENTION

The embodiment of the method according to the invention that will be described in the following is implemented in a packet switched part of a 3GPP communication system. The communication system comprises a PLMN as well as a user equipment and an LCS client accessing the network. The LCS client requires for its operation information on the location of user equipment.

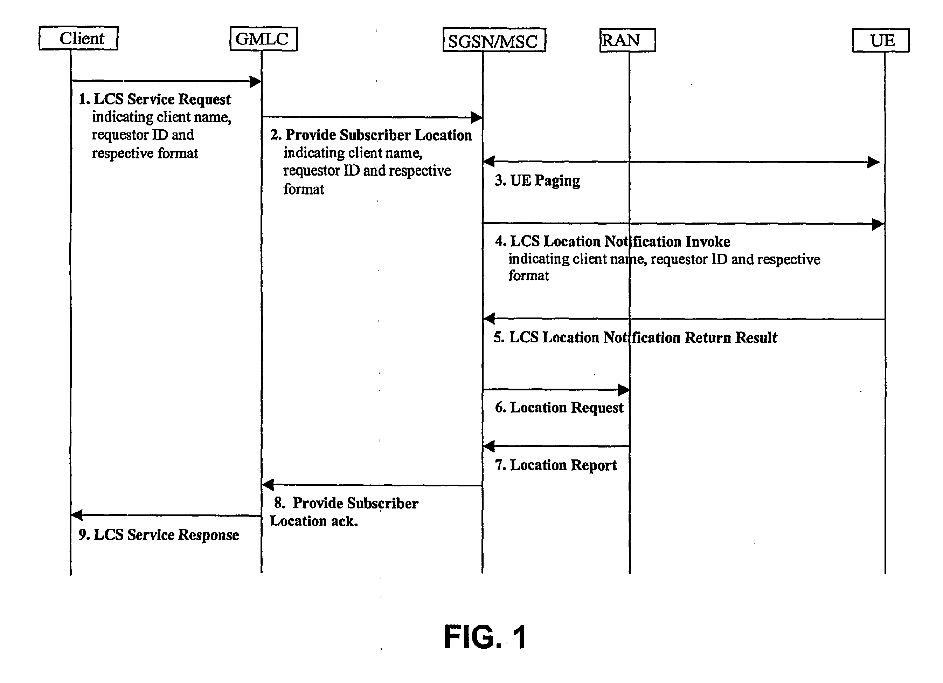

Figure 1 shows LCS related transmissions in the communication system. The figure is based on a figure in the above mentioned specification TS 23.271 illustrating the general network positioning for an LCS client external to a PLMN for circuit switched services or for packet switched services.

In figure 1, five vertical lines are depicted, representing from left to right the LCS client, a GMLC, an SGSN or MSC, a RAN and the user equipment UE. GMLC, SGSN and RAN are part of the PLMN of the communication system. The SGSN may be for instance a 2G-SGSN, the MSC a MSC server and the RAN an UTRAN. The LCS client is an application which is suited to request information on the location of a user equipment from the PLMN. It can be for instance the "friend finder" which is provided as location service by the Finnish operator Sonera. The request by the LCS client may be initiated by a requestor, i.e. by a requesting entity. Such a requestor can be for instance a person using a "friend finder" LCS client. The user equipment UE is a mobile device accessing the PLMN via the RAN. Arrows between the vertical lines represent transmissions between the different entities.

In case a requestor desires information on the location of some user equipment, it causes in a first step 1 the LCS client to transmit an "LCS Service Request" to the GMLC. In the presented embodiment of the invention, this request includes a field with a requestor ID, e.g. the name of a person, and a field with the LCS client name, which is suited to identify the client. Further, the request includes a field indicating the format employed for the requestor ID and a field indicating the format employed for the LCS client name.

Upon receipt of the "LCS service request", the GMLC verifies the identity of the LCS client and its subscription to the LCS service requested. Further, it derives the address of the target user equipment UE that is to be located and the LCS quality of service (QoS), either from subscription data or from data supplied by the LCS client. Then, the GMLC sends in step 2 a "Provide Subscriber Location" message to the SGSN to which the user equipment UE is currently associated. The message comprises again a field with the requestor ID, a field with the LCS client name, a field indicating the format of the requestor ID and a field indicating the format of the LCS client name.

In step 3, the SGSN/MSC initiates a "UE paging" procedure for paging the user equipment UE via the RAN. This enables the user equipment UE to start preparing for a possible upcoming location service.

In case the location request comes from a value added LCS client, in case the subscription profile of the user equipment UE indicates that the user equipment UE must either be notified or notified with privacy verification, and in case the user equipment UE supports a corresponding notification, a notification message has moreover to be transmitted to the user equipment UE.

These conditions are supposed to be met in the described situation, and it is further supposed that a privacy verification is required. Thus, the SGSN transmits in step 4 an "LCS Location Notification Invoke" message via the RAN to the user equipment UE. This message comprises again a field with the requestor ID, a field with the LCS client name, a field indicating the format employed for the requestor ID and a field indicating the format employed for the LCS client name. The message also informs the user equipment UE that a privacy verification is required for a location request, i.e. that the user equipment UE may or may not consent to providing location information to the LCS client.

The user equipment UE comprises a software which is able to extract the information from the received "LCS Location Notification Invoke" message. Based on the extracted format information, it determines the type of the provided requestor ID and the type of the provided client name. As a result, the user equipment UE is able to compare the received identifications immediately with corresponding information in a directory provided for this format of identification. For example, in case the requestor identification is indicated by the format information to be an e-mail address, the user equipment UE can retrieve additional information available for this e-mail address, e.g. the name of the person to whom the e-mail address belongs, directly from an e-mail directory in its memory. The retrieved information is then presented to a user on the display of the user equipment UE. Based on the retrieved information, the user equipment UE or the user of the user equipment UE is able to decide whether the location of the user equipment UE is to be indicated to the requesting entity.

In step 5, the user equipment UE may transmit an "LCS Location Notification Return Result" message back to the SGSN via the RAN. This message indicates whether the user equipment UE consents to forwarding the location information to the LCS client.

In step 6, the SGSN/MSC sends a "Location Request"

In step 6, the SGSN/MSC sends a "Location Request" message to the RAN, thereby requesting from the RAN information on the location of the user equipment UE.

When receiving the "Location Request" message, the RAN may already have knowledge of the location of the user equipment. Alternatively, it may now compute a location estimate based on position measurements provided by a selected position method. In a further alternative, the user equipment UE may contain an independent location function, e.g. a function based on GPS, and thus be able to report its location to the RAN independently. A user equipment UE with an independent location function may also make use of information broadcast by the RAN that assists this location function.

When a satisfying location information has been obtained, the RAN provides this location information in step 7 to the SGSN/MSC in a "Location Report" message. If a location estimate could not be obtained, the RAN returns a "Location Report" message containing a failure cause instead of a location estimate.

In step 8,the SGSN/MSC forwards the received location information and its age to the GMLC in a "Provide Subscriber Location ack." message, in case it has received a "LCS Location Notification Return Result" indicating that a permission to provide the information is granted. In case a "LCS Location Notification Return Result" message indicating that such a permission is not granted was received, or in case no response to the "LCS Location Notification Invoke" message was received while the UE subscription profile indicates a barring of the location, the SGSN/MSC will return an error response to the GMLC.

In step 9, finally, the GMLC transmits the location information for the user equipment UE to the requesting LCS client. The LCS client can then offer this information to the requestor.

It is understood that any of the described transmissions may comprise additional information, that some of the transmission might be carried out in a different order and that any of the different entities may perform additional tasks during the processing of the location request.

It is further to be noted that the described embodiment constitutes only one of a variety of possible embodiments of the invention.

## Claims

1. Method for supporting in a communication system a request for information on a mobile device (UE) to a cellular communication network (GMLC,SGSN,MSC,RAN) by a requesting application (Client), said method comprising providing to said mobile device (UE) an identification of said requesting application (Client) together with an indication of a format used for said identification of said requesting application (Client) and/or an identification of a requesting entity causing said requesting application to request said information together with an indication of a format used for said identification of said requesting entity (step 4).

2. Method according to claim 1, wherein said identification of said requesting application (Client) and said indication of the format used for said identification of said requesting application (Client) are transmitted by said cellular communication network (RAN) in a respective dedicated field of a notification message to said mobile device (UE) .

3. Method according to claim 1 or 2, wherein said identification of said requesting entity and said indication of the format used for said identification of said requesting entity are transmitted by said cellular communication network (RAN) in a respective dedicated field of a notification message to said mobile device (UE).

4. Method according to claim 1, wherein said identification of said requesting application is transmitted by said cellular communication network to said mobile device in a field of a notification message, and wherein said indication of the format used for said identification of said requesting application is given by the specific coding employed for coding said identification of said requesting application, which specific coding is selected depending on the format used for said identification of said requesting application.

5. Method according to claim 1 or 4, wherein said identification of said requesting entity is transmitted by said cellular communication network to said mobile device, in a field of a notification message, and wherein said indication of the format used for said identification of said requesting entity is given by the specific coding employed for coding said identification of said requesting entity, which specific coding is selected depending on the format used for said identification of said requesting entity.

6. Method According to claim 1, wherein said identification of said requesting application and said indication of the format used for said identification of said requesting application are transmitted by said cellular communication network to said mobile device in the same field of a notification message.

7. Method according to claim 1 or 6, wherein said identification of said requesting entity and said indication of the format used for said identification of said requesting entity are transmitted by said cellular communication network to said mobile device in the same field of a notification message.

8. Method according to one of the preceding claims, wherein before said transmission to said mobile device (UE) (step 4), said identification of said requesting application (Client) and/or said identification of said requesting entity is forwarded within said cellular communication network between different network entities (GMLC,SGSN,MSC) together with an indication of the format used for said identification of said requesting application (Client) and/or an indication of the format used for said identification of said requesting entity (step 2) .

9. Method according to claim 8, wherein said identification of said requesting application (Client) and said indication of the format used for said identification of said requesting application (Client) are transmitted between said different network entities in a respective dedicated field of a message.

10. Method according to claim 8 or 9, wherein said identification of said requesting entity and said indication of the format used for said identification of said requesting entity are transmitted between said different network entities in a respective dedicated field of a message.

11. Method according to claim 8, wherein said identification of said requesting application is transmitted between said different network entities in a field of a message, and wherein said indication of the format used for said identification of said requesting application is given by the specific coding employed for coding said identification of said requesting application, which specific coding is selected depending on the format used for said identification of said requesting application.

12. Method according to claim 8 or 11, wherein said identification of said requesting entity is transmitted between said different network entities in a field of a message, and wherein said indication of the format used for said identification of said requesting entity is given by the specific coding employed for coding said identification of said requesting entity, which specific coding is selected depending on the format used for said identification of said requesting entity.

13. Method according to claim 8, wherein said identification of said requesting application and said indication of the format used for said identification of said requesting application are transmitted between said different network entities in the same field of a message.

14. Method according to claim 8 or 13, wherein said identification of said requesting entity and said indication of the format used for said identification of said requesting entity are transmitted between said different network entities in the same field of a message.

15. Method according to one of the preceding claims, wherein said identification of said requesting application (Client) and/or said identification of said requesting entity is provided to said cellular communication network (GMLC) by said requesting application (Client) together with an indication of the format used for said identification of said requesting application (Client) and/or an indication of the format used for said identification of said requesting entity (step 1).

16. Method according to claim 15, wherein said identification of said requesting application (Client) and said indication of the format used for said identification of said requesting application (Client) are provided by said requesting application (Client) to said cellular communication network (GMLC) in a respective dedicated field of a message.

17. Method according to claim 15 or 16, wherein said identification of said requesting entity and said indication of the format used for said identification of said requesting entity are provided by said requesting application (Client) to said cellular communication network (GMLC) in a respective dedicated field of a message.

18. Method according to claim 15, wherein said identification of said requesting application is provided by said requesting application to said cellular communication network in a field of a message, and wherein said indication of the format used for said identification of said requesting application is given by the specific coding employed for coding said identification of said requesting application, which specific coding is selected depending on the format used for said identification of said requesting application.

19. Method according to claim 15 or 18, wherein said identification of said requesting entity is provided by said requesting application to said cellular communication network in a field of a message, and wherein said indication of the format used for said identification of said requesting entity is given by the specific coding employed for coding said identification of said requesting entity, which specific coding is selected depending on the format used for said identification of said requesting entity.

20. Method according to claim 15, wherein said identification of said requesting application and said indication of the format used for said identification of said requesting application are provided by said requesting application to said cellular communication network in the same field of a message.

21. Method according to claim 15 or 20, wherein said identification of said requesting entity and said indication of the format used for said identification of said requesting entity are provided by said requesting application to said cellular communication network in the same field of a message.

22. Method according to one of the preceding claims, wherein said requested information is location information of said mobile device (UE).

23. Protocol for a mobile service defining a notification message which is to be transmitted from a cellular communication network (GMLC,SGSN,MSC,RAN) to a mobile device (UE), and which notification message is to inform said mobile device (UE) about a request for information on said mobile device (UE) by a requesting application (Client), which protocol defines the transmission of an identification of said requesting application (Client) together with an indication of a format used for said identification of said requesting application (Client) and/or the transmission of an identification of a requesting entity causing said requesting application (Client) to request said information together with an indication of a format used for said identification of said requesting entity according to one of claims 1 to 7.

24. Protocol according to claim 23, wherein said mobile service is a mobile location service and wherein said requested information is location information of said mobile device (UE).

25. Protocol for a mobile service defining a message which is to be transmitted from a first network entity (GMLC) of a cellular communication network (GMLC,SGSN,MSC,RAN) to a second network entity (SGSN,MSC) of said cellular communication network (GMLC,SGSN,MSC,RAN), and which message is to enable said second network entity (SGSN,MSC) to inform a mobile device (UE) connected to said cellular communication network (RAN) about a request for information on said mobile device (UE) by a requesting application (Client), which protocol defines in said message the transmission of an identification of said requesting application (Client) together with an indication of a format used for said identification of said requesting application (Client) and/or the transmission of an identification of a requesting entity causing said requesting application (Client) to request said information together with an indication of a format used for said identification of said requesting entity according to one of claims 8 to 14.

26. Protocol according to claim 25, wherein said mobile service is a mobile location service and wherein said requested information is location information of said mobile device (UE).

27. Protocol for a mobile service defining a message for requesting information on a mobile device (UE) by a requesting application (Client) from a cellular communication network (GMLC,SGSN,MSC,RAN), which message is to be transmitted from said requesting application (Client) to said cellular communication network (GMLC), and which message is to enable said cellular communication network (GMLC,SGSN,MSC,RAN) to inform said mobile device (UE) about said request, which protocol defines in said message the transmission of an identification of said requesting application (Client) together with an indication of a format used for said identification of said requesting application (Client) and/or the transmission of an identification of a requesting entity causing said requesting application (Client) to request said information together with an indication of a format used for said identification of said requesting entity according to one of claims 15 to 21.

28. Protocol according to claim 27, wherein said mobile service is a mobile location service and wherein said requested information is location information of said mobile device (UE).

29. Network entity (GMLC,SGSN,MSC) for a cellular communication network comprising means for realizing the steps of a method according to one of claims 1 to 14.

30. Network entity (GMLC,SGSN,MSC) according to claim 29, wherein said requested information is location information of said mobile device (UE).

31. Cellular communication network comprising network entities (GMLC,SGSN,MSC) with means for realizing the steps of a method according to one of claims 1 to 14..

32. Cellular communication network according to claim 31, wherein said requested information is location information of said mobile device (UE).

33. Mobile device (UE) comprising
- receiving means for receiving from a cellular communication network (GMLC,SGSN,MSC,RAN) a notification message about an information request from a requesting application (Client), which notification message comprises an identification of said requesting application (Client) together with an indication of a format used for said identification of said requesting application (Client) and/or an identification of a requesting entity causing said requesting application (Client) to request said information together with an indication of a format used for said identification of said requesting entity; and
- processing means for extracting from a received notification message an included identification of a requesting application (Client) and/or of a requesting entity, for extracting from said received notification message included indications about the format used for an included identification of said requesting application (Client) and/or an included identification of said requesting entity, and for processing extracted identifications in accordance with the extracted indication of the format of said identifications.

34. Mobile device (UE) according to claim 33, wherein said requested information is location information of said mobile device (UE).

35. Communication system comprising a cellular communication network (GMLC,SGSN,MSC,RAN) according to claim 31, a mobile device (UE) according to claim 33, and a requesting application (Client) for requesting information on a mobile device from said cellular communication network.

36. Communication system according to claim 35, wherein said requested information is location information of said mobile device (UE).

## Patentansprüche

1. Verfahren zur Unterstützung in einem Kommunikationssystem von einer Anforderung von Informationen über ein mobiles Gerät (UE) an ein Mobilkommunikationsnetzwerk (GMLC, SGSN, MSC, RAN) durch eine anfordernde Anwendung (Client), wobei das Verfahren das Bereitstellen einer Identifikation der anfordernden Anwendung (Client) zusammen mit einer Angabe eines für die Identifikation der anfordernden Anwendung (Client) verwendeten Formats und/oder einer Identifikation einer anfordernden Einheit, welche die anfordernde Anwendung zu der Anforderung der Informationen veranlasst, zusammen mit einer Angabe eines für die Identifikation der anfordernden Einheit verwendeten Formats an das mobile Gerät (UE) umfasst(Schritt 4).

2. Verfahren nach Anspruch 1, wobei die Identifikation der anfordernden Anwendung (Client) und die Angabe des für die Identifikation der anfordernden Anwendung (Client) verwendeten Formats durch das Mobilkommunikationsnetzwerk (RAN) in einem jeweiligen dedizierten Feld einer Benachrichtigungsmitteilung an das mobile Gerät (UE) übertragen werden.

3. Verfahren nach Anspruch 1 oder 2, wobei die Identifikation der anfordernden Einheit und die Angabe des für die Identifikation der anfordernden Einheit verwendeten Formats durch das Mobilkommunikationsnetzwerk (RAN) in einem jeweiligen dedizierten Feld einer Benachrichtigungsmitteilung an das mobile Gerät (UE) übertragen werden.

4. Verfahren nach Anspruch 1, wobei die Identifikation der anfordernden Anwendung durch das Mobilkommunikationsnetzwerk an das mobile Gerät in einem Feld einer Benachrichtigungsmitteilung übertragen wird, und wobei die Angabe des für die Identifikation der anfordernden Anwendung verwendeten Formats durch die spezifische, für die Codierung der Identifikation der anfordernden Anwendung verwendete Codierung gegeben ist, wobei die spezifische Codierung abhängig vom für die Identifikation der anfordernden Anwendung verwendeten Format ausgewählt wird.

5. Verfahren nach Anspruch 1 oder 4, wobei die Identifikation der anfordernden Einheit durch das Mobilkommunikationsnetzwerk an das mobile Gerät in einem Feld einer Benachrichtigungsmitteilung übertragen wird, und wobei die Angabe des für die Identifikation der anfordernden Einheit verwendeten Formats durch die spezifische, für die Codierung der Identifikation der anfordernden Einheit verwendeten Codierung gegeben ist, wobei die spezifische Codierung abhängig vom für die Identifikation der anfordernden Einheit verwendeten Format ausgewählt wird.

6. Verfahren nach Anspruch 1, wobei die Identifikation der anfordernden Anwendung und die Angabe des für die Identifikation der anfordernden Anwendung verwendeten Formats durch das Mobilkommunikationsnetzwerk an das mobile Gerät im gleichen Feld einer Benachrichtigungsmitteilung übertragen werden.

7. Verfahren nach Anspruch 1 oder 6, wobei die Identifikation der anfordernden Einheit und die Angabe des für die Identifikation der anfordernden Einheit verwendeten Formats durch das Mobilkommunikationsnetzwerk an das mobile Gerät im gleichen Feld einer Benachrichtigungsmitteilung übertragen werden.

8. Verfahren nach einem der vorhergehenden Ansprüche, wobei vor der Übertragung an das mobile Gerät (UE) (Schritt 4) die Identifikation der anfordernden Anwendung (Client) und/oder die Identifikation der anfordernden Einheit innehalb des Mobilkommunikationsnetzwerkes zwischen unterschiedlichen Netzwerkeinheiten (GMLC, SGSN, MSC) zusammen mit einer Angabe des für die Identifikation der anfordernden Anwendung (Client) verwendeten Formats und/oder einer Angabe des für die Identifikation der anforderndes Einheit verwendeten Formats weitergeleitet wird (Schritt 2).

9. Verfahren nach Anspruch 8, wobei die Identifikation der anfordernden Anwendung (client) und die Angabe des für die Identifikation der anfordernden Anwendung (Client) verwendeten Formats zwischen den unterschiedlichen Netzwerkeinheiten in einem jeweiligen dedizierten Feld einer Mitteilung übertragen werden.

10. Verfahren nach Anspruch 8 oder 9, wobei die Identifikation der anfordernden Einheit und die Angabe des für die Identifikation der anforderndes Einheit verwendeten Formats zwischen den unterschiedlichen Netzwerkeinheiten in einem jeweiligen dedizierten Feld einer Mitteilung übertragen werden.

11. Verfahren nach Anspruch 8, wobei die Identifikation der anfordernden Anwendung zwischen den unterschiedlichen Netzwerkeinheiten in einem Feld einer Mitteilung übertragen wird, und wobei die Angabe des für die Identifikation der anfordernden Anwendung verwendeten Formats durch die spezifische, für die Codierung der Identifikation der anfordernden Anwendung verwendeten Codierung gegeben ist, wobei die spezifische Cod-erung abhängig vom für die Identifikation der anfordernden Anwendung verwendeten Format ausgewählt wird.

12. Verfahren nach Anspruch 8 oder 11, wobei die Identifikation der anfordernden Einheit zwischen den unterschiedlichen Netzwerkeinheiten in einem Feld einer Mitteilung übertragen wird, und wobei die Angabe des für die Identifikation der anfordernden Einheit verwendeten Formats durch die spezifische, für die Codierung der Identifikation der anfordernden Einheit verwendeten Codierung gegeben ist, wobei die spezifische Codierung abhängig vom für die Identifikation der anfordernden Einheit verwendeten Format ausgewählt wird.

13. Verfahren nach Anspruch 8, wobei die Identifikation der anfordernden Anwendung und die Angabe des für die Identifikation der anfordernden Anwendung verwendeten Formats zwischen den unterschiedlichen Netzwerkeinheiten im gleichen Feld einer Mitteilung übertragen werden.

14. Verfahren nach Anspruch 8 oder 13, wobei die Identifikation der anfordernden Einheit und die Angabe des für die Identifikation der anfordernden Einheit verwendeten Formats zwischen den unterschiedlichen Netzwerkeinheiten im gleichen Feld einer Mitteilung übertragen werden.

15. Verfahren nach einem der vorhergehenden Ansprüche, wobei die Identifikation der anfordernden Anwendung (client) und/oder die Identifikation der anfordernden Einheit an das Mobilkommunikationsnetzwerk (GMLC) durch die anfordernde Anwendung (Client) zusammen mit einer Angabe des für die Identifikation der anforderndes Anwendung (Client) verwendeten Formats und/oder einer Angabe des für die Identifikation der anforderndes Einheit verwendeten Formats bereitgestellt wird (Schritt 1).

16. Verfahren nach Anspruch 15, wobei die Identifikation der anfordernden Anwendung (Client) und die Angabe des für die Identifikation der anfordernden Anwendung (Client) verwendeten Formats durch die anfordernde Anwendung (client) dem Mobilkommunikationsnetzwerk (GMLC) in einem jeweiligen dedizierten Feld einer Mitteilung bereitgestellt werden.

17. Verfahren nach Anspruch 15 oder 16, wobei die Identifikation der anfordernden Einheit und die Angabe des für die Identifikation der anfordernden Einheit verwendeten Formats durch die anfordernde Anwendung (Client) dem Mobilkommunikationsnetzwerk (GMLC) in einem jeweiligen dedizierten Feld einer Mitteilung bereitgestellt werden.

18. Verfahren nach Anspruch 15, wobei die Identifikation der anfordernden Anwendung durch die anfordernde Anwendung dem Mobilkommunikationsnetzwerk in einem Feld einer Mitteilung bereitgestellt wird, und wobei die Angabe des für die Identifikation der anfordernden Anwendung verwendeten Formats durch die spezifische, für die Codierung der Identifikation der anfordernden Anwendung verwendete Codierung gegeben ist, wobei die spezifische Codierung abhängig vom für die Identifikation der anfordernden Anwendung verwendeten Format ausgewählt wird.

19. Verfahren nach Anspruch 15 oder 18, wobei die Identifikation der anfordernden Einheit durch die anfordernde Anwendung dem Mobilkommunikationsnetzwerk in einem Feld einer Mitteilung bereitgestellt wird, und wobei die Angabe des für die Identifikation der anforderndes Einheit verwendeten Formats durch die spezifische, für die Codierung der Identifikation der anfordernden Einheit verwendete Codierung gegeben ist, wobei die spezifische Codierung abhängig vom für die Identifikation der anforderndes Einheit verwendeten Format ausgewählt wird.

20. Verfahren nach Anspruch 15, wobei die Identifikation der anfordernden Anwendung und die Angabe des für die Identifikation der anfordernden Anwendung verwendeten Formats durch die anfordernde Anwendung dem Mobilkommunikationsnetzwerk im gleichen Feld einer Mitteilung bereitgestellt werden.

21. Verfahren nach Anspruch 15 oder 20, wobei die Identifikation der anfordernden Einheit und die Angabe des für die Identifikation der anfordernden Einheit verwendeten Formats durch die anfordernde Anwendung dem Mobilkommunikationsnetzwerk im gleichen Feld einer Mitteilung bereitgestellt werden.

22. Verfahren nach einem der vorhergehenden Ansprüche, wobei die angeforderten Informationen Positionsinformationen des mobilen Gerätes (UE) sind.

23. Protokoll für einen mobilen Dienst, welches eine Benachrichtigungsmitteilung definiert, welche von einem Mobilkommunikationsnetzwerk (GMLC, SGSN, MSC, RAN) an ein mobiles Gerät (UE) zu übertragen ist, und wobei die Benachrichtigungsmitteilung das mobile Gerät (UE) über eine Anforderung von Informationen über das mobile Gerät (UE) durch eine anfordernde Anwendung (Client) informieren soll, wobei das Protokoll die Übertragung einer Identifikation der anfordernden Anwendung (Client) zusammen mit einer Angabe eines für die Identifikation der anfordernden Anwendung (Client) verwendeten Formats und/oder die Übertragung einer Identifikation einer anfordernden Einheit, welche die anfordernde Anwendung (Client) zur Anforderung der Informationen veranlasst, zusammen mit einer Angabe eines für die Identifikation der anfordernden Einheit verwendeten Formats nach einem der Ansprüche 1 bis 7 definiert.

24. Protokoll nach Anspruch 23, wobei der mobile Dienst ein mobiler Positionsdienst ist, und wobei die angeforderten Informationen Positionsinformationen des mobilen Gerätes (UE) sind.

25. Protokoll für einen mobilen Dienst, welches eine Mitteilung definiert, welche von einer ersten Netzwerkeinheit (GMLC) eines Mobilkommunikationsnetzwerkes (GMLC, SGSN MSC, RAN) an eine zweite Netzwerkeinheit (SGSN, MSC) des Mobilkommunikationsnetzwerkes (GMLC, SGSN, MSC, RAN) übe-tragen werden soll, und wobei die Mitteilung die zweite Netzwerkeinheit (SGSN, MSC) befähigen soll, ein mobiles Gerät (UE), welches mit dem Mobilkommunikationsnetzwerk (RAN) verbunden ist, über eine Anforderung von Informationen über das mobile Gerät (UE.) durch eine anfordernde Anwendung (Client) zu informieren, wobei das Protokoll in der Mitteilung die Übertragung einer Identifikation der anfordernden Anwendung (Client) zusammen mit einer Angabe eines für die Identifikation der anfordernden Anwendung (Client) verwendeten Formats und/oder die Übertragung einer Identifikation einer anfordernden Einheit, welche die anfordernde Anwendung (Client) zur Anforderung der Informationen veranlasst, zusammen mit einer Angabe eines für die Identifikation der anfordernden Einheit verwendeten Formats nach einem der Ansprüche 8 bis 14 definiert.

26. Protokoll nach Anspruch 25, wobei der mobile Dienst ein mobiler Positionsdienst ist, und wobei die angeforderten Informationen Positionsinformationen des mobilen Gerätes (UE) sind.

27. Protokoll für einen mobilen Dienst, welches eine Mitteilung zur Anforderung von Informationen über ein mobiles Gerät (UE) durch eine anfordernde Anwendung (Client) an ein Mobilkom-nunikationsnetzwerk (GMLC, SGSN, MSC, RAN) definiert, wobei die Mitteilung von der anfordernden Anwendung (Client) an das Mobilkommunikationsnetzwerk (GMLC) übertragen werden soll, und wobei die Mitteilung das Mobilkommunikationsnetzwerk (GMLC, SGSN, MSC, RAN) befähigen soll, das mobile Gerät (UE) über die Anforderung zu informieren, wobei das Protokoll in der Mitteilung die Übertragung einer Identifikation der anfordernden Anwendung (Client) zusammen mit einer Angabe eines für die Identifikation der anforderndes Anwendung (Client) verwendeten Formats und/oder die Übertragung einer Identifikation einer anfordernden Einheit, welche die anfordernde Anwendung (Client) zur Anforderung der Informationen veranlasst, zusammen mit einer Angabe eines für die Identifikation der anfordernden Einheit verwendeten Formats nach einem der Ansprüche 15 bis 21 definiert.

28. Protokoll nach Anspruch 27, wobei der mobile Dienst ein mobiler Positionsdienst ist, und wobei die angeforderten Informationen Positionsinformationen des mobilen Gerätes (UE) sind.

29. Netzwerkeinheit (GMLC, SGSN, MSC) für ein Mobilkommunikationsnetzwerk, welche Mittel zum Realisieren der Schritte eines Verfahrens nach einem der Ansprüche 1 bis 14 umfasst.

30. Netzwerkeinheit (GMLC, SGSN, MSC) nach Anspruch 29, wobei die angeforderter Informationen Positionsinformationen des mobilen Gerätes (UE) sind.

31. Mobilkommunikationsnetzwerk, welches Netzwerkeinheiten (GMLC, SGSN, MSC) mit Mitteln zum Realisieren der Schritte eines Verfahrens nach einem der Ansprüche 1 bis 14 umfasst.

32. Mobilkommunikationsnetzwerk nach Anspruch 31, wobei die angeforderten Informationen Positionsinformationen des mobilen Gerätes (UE) sind.

33. Mobiles Gerät (UE), welches Folgendes umfasst
- Empfangsmittel zum Empfangen einer Benachrichtigungsmitteilung über eine Informationsanforderung durch eine anfordernde Anwendung (Client) von einem Mobilkommunikationsnetzwerk (GMLC, SGSN, MSC, RAN), wobei die Benachrichtigunasmitteilung eine Identifikation der anforderndes Anwendung (Client) zusammen mit einer Angabe eines für die Identifikation der anfordernden Anwendung (Client) verwendeten Formats und/oder eine Identifikation einer anfordernden Einheit, welche die anfordernde Anwendung (Client) zum Anfordert der Informationen veranlasst, zusammen mit einer Angabe eines für die Identifikation der anfordernden Einheit verwendeten Formats umfasst; und
- Verarbeitungsmittel zum Extrahieren einer enthaltenen Identifikation einer anfordernden Anwendung (Client) und/oder einer anfordernden Einheit aus einer empfangenen Benachrichtigungsmitteilung, zum Extrahieren enthaltener Angaben über das für eine enthaltene Identifikation der anforderndes Anwendung (Client) und/oder eine enthaltene Identifikation der anfordernden Einheit verwendete Format aus der empfangenen Benachrichtigungsmitteilung, und zum Verarbeiten extrahierter Identifikationen in Übereinstimmung mit der extrahierten Angabe des Formates der Identifikationen.

34. Mobiles Gerät (UE) nach Anspruch 33, wobei die angeforderter Informationen Positionsinformationen des mobilen Gerätes (UE) sind.

35. Kommunikationssystem, welches ein Mobilkommunikationsnetzwerk (GMLC, SGSN, MSC, RAN) nach Anspruch 31, ein mobiles Gerät (UE) nach Anspruch 33 und eine anfordernde Anwendung (Client) zur Anforderung von Informationen über ein mobiles Gerät an das Mobilkommunikationsnetzwerk umfasst.

36. Kommunikationssystem nach Anspruch 35, wobei die angeforderten Informationen Positionsinformationen des mobilen Gerätes (UE) sind.

## Revendications

1. Procédé pour prendre en charge, dans un système de communication, une demande d'information sur un dispositif mobile (UE) à un réseau de communication cellulaire (GMLC, SGSN, MSC, RAN) par une application de requête (client), ledit procédé comportant l'étape consistant à fournir, audit dispositif mobile (UE), une identification de ladite application de requête (client) avec une indication d'un format utilisé pour ladite identification de ladite application de requête (client) et/ou une identification d'une entité de requête faisant en sorte que ladite application de requête demande ladite information avec une indication d'un format utilisé pour ladite identification de ladite entité de requête (étape 4).

2. Procédé selon la revendication 1, dans lequel ladite identification de ladite application de requête (client) et ladite indication du format utilisé pour ladite identification de ladite application de requête (client) sont transmises, par ledit réseau de communication cellulaire (RAN), dans un champ dédié respectif d'un message de notification, audit dispositif mobile (UE).

3. Procédé selon la revendication 1 ou 2, dans lequel ladite identification de ladite entité de requête et ladite indication du format utilisé pour ladite identification de ladite entité de requête sont transmises, par ledit réseau de communication cellulaire (RAN), dans un champ dédié respectif d'un message de notification, audit dispositif mobile (UE).

4. Procédé selon la revendication 1, dans lequel ladite identification de ladite application de requête est transmise par ledit réseau de communication cellulaire audit dispositif mobile dans un champ d'un message de notification, et dans lequel ladite indication du format utilisé pour ladite identification de ladite application de requête est donnée par le codage spécifique employé pour coder ladite identification de ladite application de requête, lequel codage spécifique est sélectionné en fonction du format utilisé pour ladite identification de ladite application de requête.

5. Procédé selon la revendication 1 ou 4, dans lequel ladite identification de ladite entité de requête est transmise par ledit réseau de communication cellulaire audit dispositif mobile dans un champ d'un message de notification, et dans lequel ladite indication du format utilisé pour ladite identification de ladite entité de requête est donnée par le codage spécifique employé pour coder ladite identification de ladite entité de requête, lequel codage spécifique est sélectionné en fonction du format utilisé pour ladite identification de ladite entité de requête.

6. Procédé selon la revendication 1, dans lequel ladite identification de ladite application de requête et ladite indication du format utilisé pour ladite identification de ladite application de requête sont transmises, par ledit réseau de communication cellulaire, audit dispositif mobile, dans le même champ d'un message de notification.

7. Procédé selon la revendication 1 ou 6, dans lequel ladite identification de ladite entité de requête et ladite indication du format utilisé pour ladite identification de ladite entité de requête sont transmises, par ledit réseau de communication cellulaire, audit dispositif mobile, dans le même champ d'un message de notification.

8. Procédé selon l'une quelconque des revendications précédentes, dans lequel avant ladite transmission audit dispositif mobile (UE) (étape 4), ladite identification de ladite application de requête (client) et/ou ladite identification de ladite entité de requête est, ou sont, acheminée(s) au sein dudit réseau de communication cellulaire entre différentes entités de réseau (GMLC, SGSN, MSC) avec une indication du format utilisé pour ladite identification de ladite application de requête (client) et/ou une indication du format utilisé pour ladite identification de ladite entité de requête (étape 2).

9. Procédé selon la revendication 8, dans lequel ladite identification de ladite application de requête (client) et ladite indication du format utilisé pour ladite identification de ladite application de requête (client) sont transmises entre lesdites différentes entités de réseau dans un champ dédié respectif d'un message.

10. Procédé selon la revendication 8 ou 9, dans lequel ladite identification de ladite entité de requête et ladite indication du format utilisé pour ladite identification de ladite entité de requête sont transmises entre lesdites différentes entités de réseau dans un champ dédié respectif d'un message.

11. Procédé selon la revendication 8, dans lequel ladite identification de ladite application de requête est transmise entre lesdites différentes entités de réseau dans un champ d'un message, et dans lequel ladite indication du format utilisé pour ladite identification de ladite application de requête est donnée par le codage spécifique employé pour coder ladite identification de ladite application de requête, lequel codage spécifique est sélectionné en fonction du format utilisé pour ladite identification de ladite application de requête.

12. Procédé selon la revendication 8 ou 11, dans lequel ladite identification de ladite entité de requête est transmise entre lesdites différentes entités de réseau dans un champ d'un message, et dans lequel ladite indication du format utilisé pour ladite identification de ladite entité de requête est donnée par le codage spécifique employé pour coder ladite identification de ladite entité de requête, lequel codage spécifique est sélectionné en fonction du format utilisé pour ladite identification de ladite entité de requête.

13. Procédé selon la revendication 8, dans lequel ladite identification de ladite application de requête et ladite indication du format utilisé pour ladite identification de ladite application de requête sont transmises entre lesdites différentes entités de réseau dans le même champ d'un message.

14. Procédé selon la revendication 8 ou 13, dans lequel ladite identification de ladite entité de requête et ladite indication du format utilisé pour ladite identification de ladite entité de requête sont transmises entre lesdites différentes entités de réseau dans le même champ d'un message.

15. Procédé selon l'une quelconque des revendications précédentes, dans lequel ladite identification de ladite application de requête (client) et/ou ladite identification de ladite entité de requête est, ou sont, délivrée(s) audit réseau de communication cellulaire (GMLC) par ladite application de requête (client) avec une indication du format utilisé pour ladite identification de ladite application de requête (client) et/ou une indication du format utilisé pour ladite identification de ladite entité de requête (étape 1).

16. Procédé selon la revendication 15, dans lequel ladite identification de ladite application de requête (client) et ladite indication du format utilisé pour ladite identification de ladite application de requête (client) sont délivrées par ladite application de requête (client) audit réseau de communication cellulaire (GMLC) dans un champ dédié respectif d'un message.

17. Procédé selon la revendication 15 ou 16, dans lequel ladite identification de ladite entité de requête et ladite indication du format utilisé pour ladite identification de ladite entité de requête, sont délivrées, par ladite application de requête (client), audit réseau de communication cellulaire (GMLC), dans un champ dédié respectif d'un message.

18. Procédé selon la revendication 15, dans lequel ladite identification de ladite application de requête est délivrée, par ladite application de requête, audit réseau de communication cellulaire dans un champ d'un message, et dans lequel ladite indication du format utilisé pour ladite identification de ladite application de requête est donnée par le codage spécifique employé pour coder ladite identification de ladite application de requête, lequel codage spécifique est sélectionné en fonction du format utilisé pour ladite identification de ladite application de requête.

19. Procédé selon la revendication 15 ou 18, dans lequel ladite identification de ladite entité de requête est délivrée par ladite application de requête audit réseau de communication cellulaire dans un champ d'un message, et dans lequel ladite indication du format utilisé pour ladite identification de ladite entité de requête est donnée par le codage spécifique employé pour coder ladite identification de ladite entité de requête, lequel codage spécifique est sélectionné en fonction du format utilisé pour ladite identification de ladite entité de requête.

20. Procédé selon la revendication 15, dans lequel ladite identification de ladite application de requête et ladite indication du format utilisé pour ladite identification de ladite application de requête sont délivrées, par ladite application de requête, audit réseau de communication cellulaire, dans le même champ d'un message.

21. Procédé selon la revendication 15 ou 20, dans lequel ladite identification de ladite entité de requête et ladite indication du format utilisé pour ladite identification de ladite entité de requête sont délivrées par ladite application de requête, audit réseau de communication cellulaire, dans le même champ d'un message.

22. Procédé selon l'une quelconque des revendications précédentes, dans lequel ladite information demandée est une information de localisation dudit dispositif mobile (UE).

23. Protocole pour un service mobile définissant un message de notification lequel doit être transmis d'un réseau de communication cellulaire (GMLC, SGSN, MSC, RAN) à un dispositif mobile (UE), et lequel message de notification sert à informer ledit dispositif mobile (UE) relativement à une demande d'information sur ledit dispositif mobile (UE) par une application de requête (client), lequel protocole définit la transmission d'une identification de ladite application de requête (client) avec une indication d'un format utilisé pour ladite identification de ladite application de requête (client) et/ou la transmission d'une identification d'une entité de requête faisant en sorte que ladite application de requête (client) demande ladite information avec une indication d'un format utilisé pour ladite identification de ladite entité de requête selon l'une quelconque des revendications 1 à 7.

24. Protocole selon la revendication 23, dans lequel ledit service mobile est un service de localisation de mobiles et dans lequel ladite information demandée est une information de localisation dudit dispositif mobile (UE).

25. Protocole pour un service mobile définissant un message lequel doit être transmis d'une première entité de réseau (GMLC) appartenant à un réseau de communication cellulaire (GMLC, SGSN, MSC, RAN) à une seconde entité de réseau (SGSN, MSC) dudit réseau de communication cellulaire (GMLC, SGSN, MSC, RAN), et lequel message est utilisé pour activer ladite seconde entité de réseau (SGSN, MSC) en vue d'informer un dispositif mobile (UE) connecté audit réseau de communication cellulaire (RAN) relativement à une demande d'information sur ledit dispositif mobile (UE) par une application de requête (client), lequel protocole définit, dans ledit message, la transmission d'une identification de ladite application de requête (client) avec une indication d'un format utilisé pour ladite identification de ladite application de requête (client) et/ou la transmission d'une identification d'une entité de requête faisant en sorte que ladite application de requête (client) demande ladite information avec une indication d'un format utilisé pour ladite identification de ladite entité de requête selon l'une quelconque des revendications 8 à 14.

26. Protocole selon la revendication 25, dans lequel ledit service mobile est un service de localisation de mobiles et dans lequel ladite information demandée est une information de localisation dudit dispositif mobile (UE).

27. Protocole pour un service mobile définissant un message pour demander une information sur un dispositif mobile (UE) par une application de requête (client) d'un réseau de communication cellulaire (GMLC, SGSN, MSC, RAN), lequel message doit être transmis de ladite application de requête (client) audit réseau de communication cellulaire (GMLC), et lequel message est utilisé pour activer ledit réseau de communication cellulaire (GMLC, SGSN, MSC, RAN) en vue d'informer ledit dispositif mobile (UE) concernant ladite demande, lequel protocole définit, dans ledit message, la transmission d'une identification de ladite application de requête (client) avec une indication d'un format utilisé pour ladite identification de ladite application de requête (client) et/ou la transmission d'une identification d'une entité de requête forçant ladite application de requête (client) à demander ladite information avec une indication d'un format utilisé pour ladite identification de ladite entité de requête selon l'une quelconque des revendications 15 à 21.

28. Protocole selon la revendication 27, dans lequel ledit service mobile est un service de localisation de mobiles et dans lequel ladite information demandée est une information de localisation dudit dispositif mobile (UE).

29. Entité de réseau (GMLC, SGSN, MSC) pour un réseau de communication cellulaire comportant des moyens pour mettre en oeuvre les étapes d'un procédé selon l'une quelconque des revendications 1 à 14.

30. Entité de réseau (GMLC, SGSN, MSC) selon la revendication 29, dans lequel ladite information demandée est une information de localisation dudit dispositif mobile (UE).

31. Réseau de communication cellulaire comportant des entités de réseau (GMLC, SGSN, MSC) avec des moyens pour mettre en oeuvre les étapes d'un procédé selon l'une quelconque des revendications 1 à 14.

32. Réseau de communication cellulaire selon la revendication 31, dans lequel ladite information demandée est une information de localisation dudit dispositif mobile (UE).

33. Dispositif mobile (UE) comportant
- un moyen de réception pour recevoir, d'un réseau de communication cellulaire (GMLC, SGSN, MSC, RAN), un message de notification concernant une demande d'information d'une application de requête (client), lequel message de notification comporte une identification de ladite application de requête (client) avec une indication d'un format utilisé pour ladite identification de ladite application de requête (client) et/ou une identification d'une entité de requête faisant en sorte que ladite application de requête (client) demande ladite information avec une indication d'un format utilisé pour ladite identification de ladite entité de requête ; et
- un moyen de traitement pour extraire, d'un message de notification reçu, une identification incluse d'une application de requête (client) et/ou d'une entité de requête, pour extraire dudit message de notification reçu des indications incluses concernant le format utilisé pour une identification incluse de ladite application de requête (client) et/ou une identification incluse de ladite entité de requête, et pour traiter des identifications extraites selon l'indication extraite du format desdites identifications.

34. Dispositif mobile (UE) selon la revendication 33, dans lequel ladite information demandée est une information de localisation dudit dispositif mobile (UE).

35. Système de communication comportant un réseau de communication cellulaire (GMLC, SGSN, MSC, RAN) selon la revendication 31, un dispositif mobile (UE) selon la revendication 33, et une application de requête (client) pour demander une information sur un dispositif mobile dudit réseau de communication cellulaire.

36. Système de communication selon la revendication 35, dans lequel ladite information demandée est une information de localisation dudit dispositif mobile (UE).
